# EUROPEAN PATENT APPLICATION

(11) **EP 4 769 261 A1**
(43) Date of publication of application: **01.07.2026**
(21) Application number: 25222427.4
(22) Date of filing: 11.12.2025
(51) Int. Cl.: G06Q 10/06, G06Q 10/063, G06Q 10/04, G06Q 50/02, A01D 34/00, A01G 7/00, A01G 7/06, A01G 22/00, A01D 34/54, A01D 34/74, G06Q 10/0631, G06Q 10/0633

(54) **MANAGEMENT METHOD, PROGRAM, AND INFORMATION PROCESSING SYSTEM**

(30) Priority: 27.12.2024 JP 2024233077
(71) Applicant: HONDA MOTOR CO., LTD., Tokyo 105-8404 (JP)
(72) Inventor: NISHIMIYA, Kenji, Saitama, 3510193 (JP); OCHIAI, Patrick Yoshihiro, Saitama, 3510193 (JP); SHAH, Nikunj, Saitama, 3510193 (JP)
(74) Representative: Kiwit, Benedikt

(57) **Abstract**

A management method for managing a work site, the management method comprising an acquisition step of acquiring a growth state of a plant growing in the work site.

## Description

### TECHNICAL FIELD

### Field of the Invention

The present invention relates to a management method, a program, and an information processing system.

### BACKGROUND

International Publication No. 2022/264258 discloses that a work time in a current work area is predicted on the basis of area information regarding the current work area and history information in which area information regarding a past work area and time information regarding a work time in the past work area are associated with each other.

However, the technique described in International Publication No. 2022/264258 has a problem that it is difficult to grasp a growth state of a plant growing in a work site.

### SUMMARY OF THE INVENTION

The present invention has been made in view of the above problem, and provides a technique capable of grasping a growth state of a plant growing in a work site.

According to one aspect of the present invention, there is provided a management method as specified in claim 1. Optional features are specified in claims 2 to 16. According to one aspect of the present invention, there is provided a program as specified in claim 17. According to one aspect of the present invention, there is provided an information processing system as specified in claim 18.

### BRIEF DESCRIPTION OF THE DRAWINGS

FIG. 1 is a diagram illustrating a configuration example of an information processing system according to one embodiment;
FIG. 2 is a diagram illustrating an example of a hardware configuration of a work machine according to one embodiment;
FIG. 3 is a diagram illustrating an example of a hardware configuration of a server apparatus according to one embodiment;
FIG. 4 is a diagram illustrating an example of a hardware configuration of an information processing apparatus according to one embodiment;
FIG. 5 is a diagram illustrating an example of a functional configuration of the server apparatus according to one embodiment;
FIG. 6 is a diagram illustrating an example of a processing sequence of the information processing system according to one embodiment;
FIG. 7 is a flowchart illustrating a procedure of processing executed by the server apparatus according to one embodiment;
FIG. 8 is a flowchart illustrating a detailed procedure of a process of acquiring an elongation amount of a plant according to a first embodiment;
FIG. 9 is a flowchart illustrating a detailed procedure of a process of acquiring an elongation amount of a plant according to a second embodiment;
FIG. 10 is a flowchart illustrating a detailed procedure of a process of acquiring an elongation amount of a plant according to a third embodiment;
FIG. 11 is a view illustrating an example of work information according to the first embodiment;
FIG. 12 is a view illustrating an example of work information according to the third embodiment;
FIG. 13 is a view illustrating a display example of information regarding a growth state according to one embodiment;
FIG. 14 is a view illustrating a display example of information regarding a growth state and information regarding a work plan according to one embodiment; and
FIG. 15 is a view illustrating a display example of information regarding a growth state and information regarding a work plan according to one embodiment.

### DESCRIPTION OF THE EMBODIMENTS

Hereinafter, embodiments will be described in detail with reference to the attached drawings. Note, the following embodiments are not intended to limit the scope of the claimed invention, and limitation is not made to an invention that requires a combination of all features described in the embodiments. Two or more of the multiple features described in the embodiments may be combined as appropriate. Furthermore, the same reference numerals are given to the same or similar configurations, and redundant description thereof is omitted.

### (First Embodiment)

### <System Configuration>

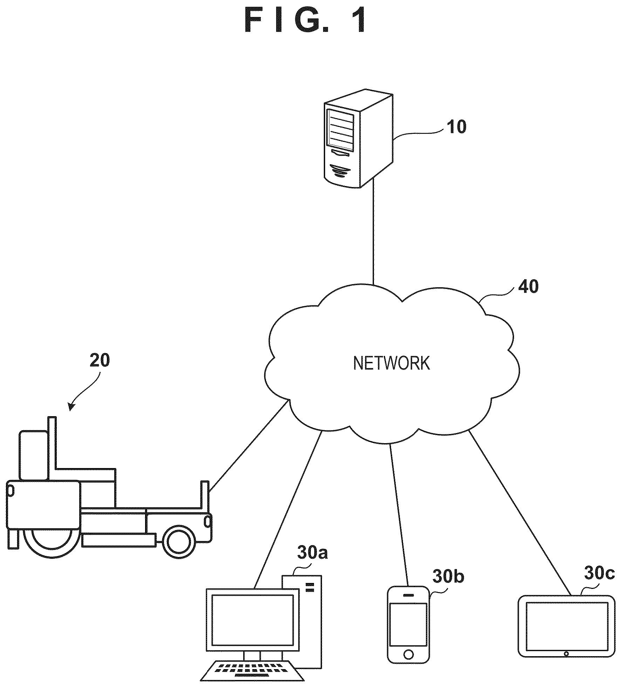

FIG. 1 is a diagram illustrating a configuration example of an information processing system according to the present embodiment. In FIG. 1, reference numeral 10 denotes a server apparatus (an information processing apparatus). Reference numeral 20 denotes a work machine that is, for example, a grass mower or a lawn mower, but is not limited thereto. The work machine according to the present embodiment is a riding work machine, but may be operable as an autonomous work machine without being operated by an occupant. In addition, the work machine may be an unmanned autonomous work machine.

Reference numerals 30a to 30c denote information processing apparatuses, and terminal devices possessed or owned by a user. Reference numeral 30a denotes a personal computer, reference numeral 30b denotes a smartphone, and reference numeral 30c denotes a tablet terminal. The user can use at least one of these. Any one of the information processing apparatuses 30a to 30c is also referred to as an information processing apparatus 30. The information processing apparatus 30 operates as an information processing apparatus that provides information to a work-related person (that is, the user) including any one of a worker who performs work on a work site, a supervisor who supervises the worker, a manager of the work site, and an owner of the work site. In addition, the server apparatus 10 may operate as the information processing apparatus that provides information to the work-related person. Reference numeral 40 denotes a network. The server apparatus 10, the work machine 20, and the information processing apparatus 30 are connected in a communication-enabling manner via the network 40.

### <Hardware Configuration>

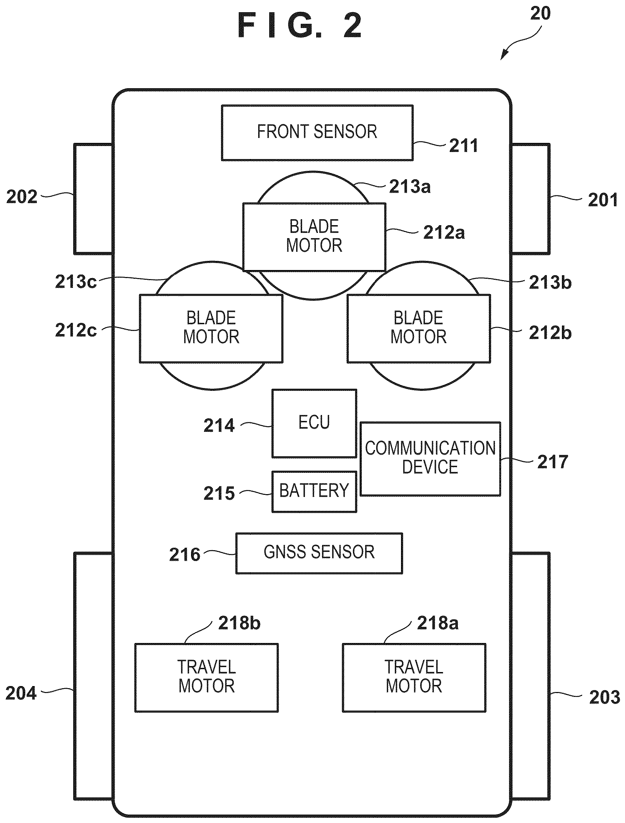

FIG. 2 is a diagram illustrating an example of a hardware configuration of the work machine according to the present embodiment. The work machine 20 includes a right front wheel 201, a left front wheel 202, a right rear wheel 203, and a left rear wheel 204. In the present embodiment, the rear wheels are drive wheels. The work machine 20 further includes a front sensor, blade motors 212a to 212c, blades 213a to 213c, an ECU 214, a battery 215, a GNSS sensor 216, a communication device 217, and travel motors 218a to 218b. The blade motors 212a to 212c are also collectively referred to as a blade motor 212. The blades 213a to 213c are also collectively referred to as a blade 213. The travel motors 218a to 218b are also collectively referred to as a travel motor 218.

The front sensor 211 is a stereo camera that captures an image of the front of the work machine 20. The blade motor 212 drives the blade 213. A height of the blade 213 is manually adjustable to multiple blade heights. In addition, a height adjuster (not illustrated) that can automatically adjust the height of the blade 213 to a desired height may be further provided. The ECU 214 is an electronic control unit, and controls various operations of the work machine 20. The battery 215 is a drive source of the work machine 20.

The GNSS sensor 216 is a sensor that receives a satellite signal of a global navigation satellite system. A position of the work machine 20 can be measured using the signal received by the GNSS sensor 216. The communication device 217 performs wired and/or wireless communication with another device. The travel motor 218a drives the right rear wheel 203. The travel motor 218b drives the left rear wheel 204. The travel motors are individually operable and capable of performing a turning operation at the spot.

Although three sets of the blade 213 and the blade motor 212 for driving the blade are provided in the present embodiment, the number thereof is not limited.

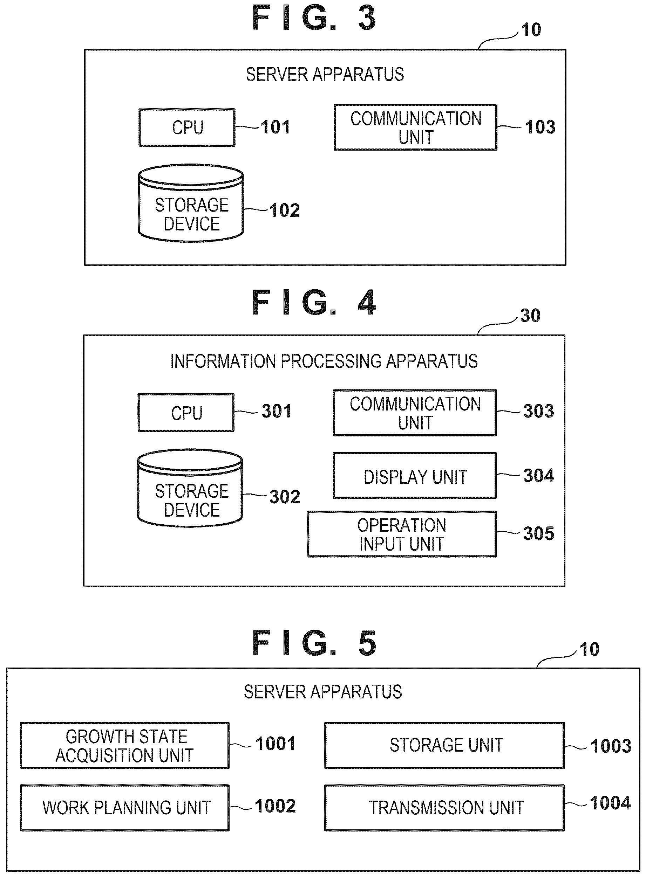

FIG. 3 is a diagram illustrating an example of a hardware configuration of the server apparatus according to the present embodiment. The server apparatus 10 includes a CPU 101, a storage device 102, and a communication unit 103. A control operation of the server apparatus 10 is achieved by the CPU 101 reading and executing a computer program stored in the storage device 102. The CPU 101 may be one or more CPUs. The storage device 102 is one or more memories that store several types of information. For example, information that has been received from another device, a computer program to be read and executed by the CPU 101, and the like are stored. The communication unit 103 has a function of communicating with another device in a wired or wireless manner through the network 40.

FIG. 4 is a diagram illustrating an example of a hardware configuration of the information processing apparatus according to the present embodiment. The information processing apparatus 30 includes a CPU 301, a storage device 302, a communication unit 303, a display unit 304, and an operation input unit 305. A control operation of the information processing apparatus 30 is achieved by the CPU 301 reading and executing a computer program stored in the storage device 302. The CPU 301 may be one or more CPUs. The storage device 302 is one or more memories that store several types of information. For example, information that has been received from another device, a computer program to be read and executed by the CPU 301, and the like are stored.

The communication unit 303 has a function of communicating with another device in a wired or wireless manner through the network 40. The display unit 304 displays various types of information to the user. The operation input unit 305 receives an operation input from the user. The operation input unit 305 can include a keyboard, a mouse, a touch panel, and the like.

### <Functional Configuration>

Next, an example of a functional configuration of the server apparatus according to the present embodiment will be described with reference to FIG. 5. The server apparatus 10 includes a growth state acquisition unit 1001, a work planning unit 1002, a storage unit 1003, and a transmission unit 1004.

The growth state acquisition unit 1001 acquires a growth state of a plant (for example, lawn grass) growing in the work site. Here, the growth state of the plant can include an elongation amount of the plant, and the elongation amount may be the elongation amount from a time point when the plant has been previously cut. The work planning unit 1002 plans work (for example, cutting work of cutting the plant (grass mowing work or lawn mowing work)) in the work site based on the growth state of the plant acquired by the growth state acquisition unit 1001. A work plan can include plan content such as when the next work is to be performed and any height to which the blade height in the next work is to be adjusted.

The storage unit 1003 stores various types of information. For example, work information received from the work machine 20 is stored, and a height of the plant in the work site is stored in association with a geographical position of the plant in the work site. The transmission unit 1004 transmits the information regarding the growth state of the plant acquired by the growth state acquisition unit 1001 to the information processing apparatus 30. In addition, the transmission unit 1004 transmits information regarding the work plan planned by the work planning unit 1002 to the information processing apparatus 30.

### <Processing>

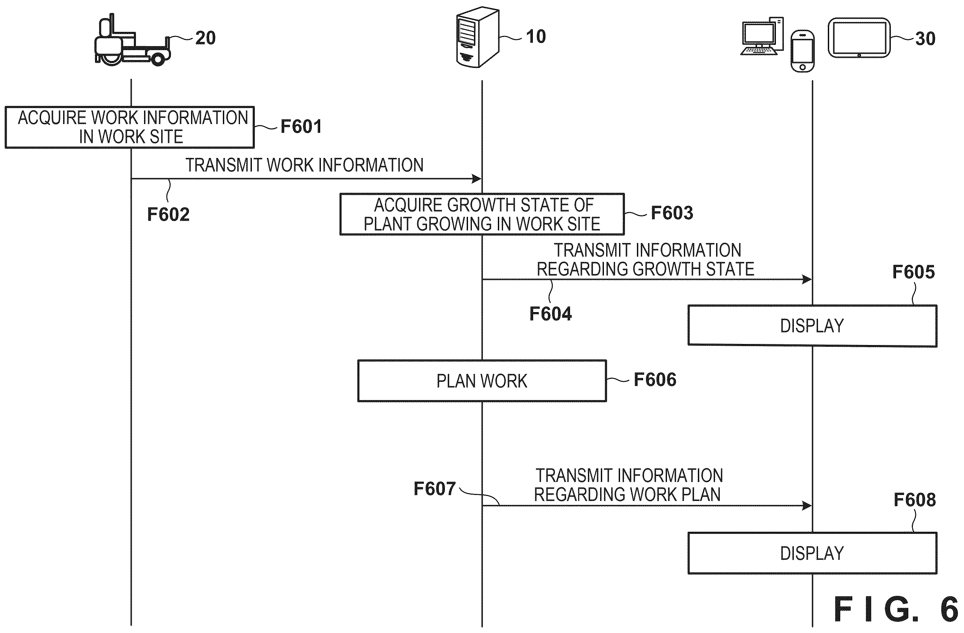

Next, processing of the information processing system according to one embodiment will be described with reference to a processing sequence of FIG. 6. In F601, the work machine 20 performs work (for example, lawn mowing work or grass mowing work) in a work site and acquires work information in the work site. The work machine 20 acquires, as the work information, the current work date, position information of the work machine 20 calculated from received information acquired via the GNSS sensor 216, a height of the blade 213 during the previous work, a height of a plant before the current work, a height of the blade 213 during the current work, information on a used device during work, and the like in association with one another.

Here, the information on the used device may be, for example, a type of a work machine (particularly, a type of a mounted blade) or information indicating a deterioration state of the blade. Since there may be a difference in a cut surface at the time of work depending on the type of the work machine, the subsequent growth status (elongation amount) of the plant may change depending on the type of the work machine. Since there are a type of a work machine that makes the plant easily elongate after cutting and a type of a work machine that makes the plant hardly elongate after cutting, such information may be held as the information on the used device. In addition, the subsequent growth status (elongation amount) of the plant may change depending on the deterioration state of the blade. Therefore, information (for example, an elapsed time from the previous blade replacement, cumulative work time or the number of times of work from the previous blade replacement, or the like) indicating the deterioration state of the blade may be held as the information on the used device.

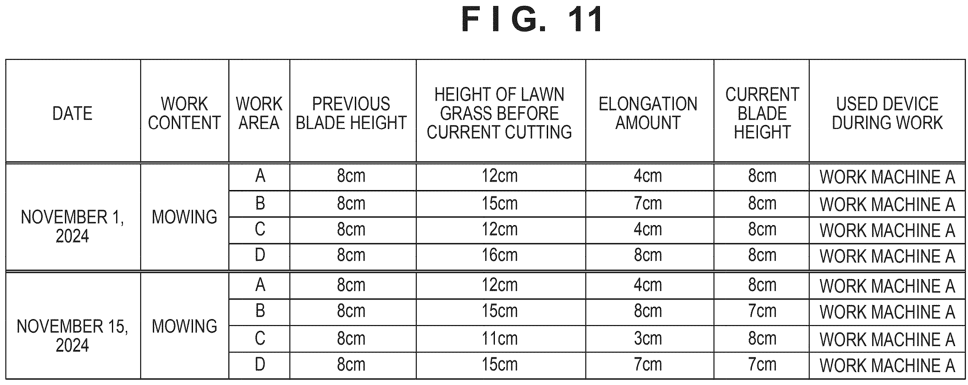

Here, FIG. 11 is a view illustrating an example of work information according to the present embodiment. The work information includes a work date, work content, a work area, the previous blade height, a height of lawn grass before the current cutting, the elongation amount, the current blade height, and the information on the used device during work. The height of lawn grass before the current cutting can be estimated by analyzing a captured image acquired by the front sensor 211 included in the work machine 20. The work information may include information on the height of lawn grass before the current cutting estimated by the work machine 20 based on the captured image, or the work information may include the captured image acquired by the front sensor 211. In this case, the server apparatus 10 may analyze the captured image to estimate the height of lawn grass before the current cutting.

For example, in work performed on November 1, 2024 as the work date, the work content is lawn mowing, the previous blade height and the height of lawn grass before the current mowing in work area A are 8 cm and 12 cm, respectively, and the elongation amount in this case is 12 cm - 8 cm = 4 cm. The current blade height is also 8 cm, and the used device during work is work machine A. Similarly, the elongation amount in work area B is 7 cm, the elongation amount in work area C is 4 cm, and the elongation amount in work area D is 8 cm. As described above, it can be seen that the elongation amounts in the work area B and the work area D are larger than the elongation amounts in the work area A and the work area C.

In addition, in work performed on November 15, 2024 as the work date, the work content is lawn mowing, the previous blade height and the height of lawn grass before the current mowing in the work area A are 8 cm and 12 cm, respectively, and the elongation amount in this case is 12 cm - 8 cm = 4 cm. The current blade height is also 8 cm, and the used device during work is work machine A. Similarly, the elongation amount in the work area B is 8 cm, the elongation amount in the work area C is 3 cm, and the elongation amount in the work area D is 7 cm. As described above, it can be seen that the elongation amounts in the work area B and the work area D are larger than the elongation amounts in the work area A and the work area C. Since there is a difference in the elongation amount even though work is performed with the same work machine A, there is a possibility that the work area B and the work area D are in an environment where sunlight is good and the plant easily elongates, for example.

In F602, the ECU 214 of the work machine 20 transmits the work information to the server apparatus 10 using the communication device 217. Note that the transmission may be performed after the work machine 20 finishes work in the entire work site, or the transmission may be sequentially performed while executing the work.

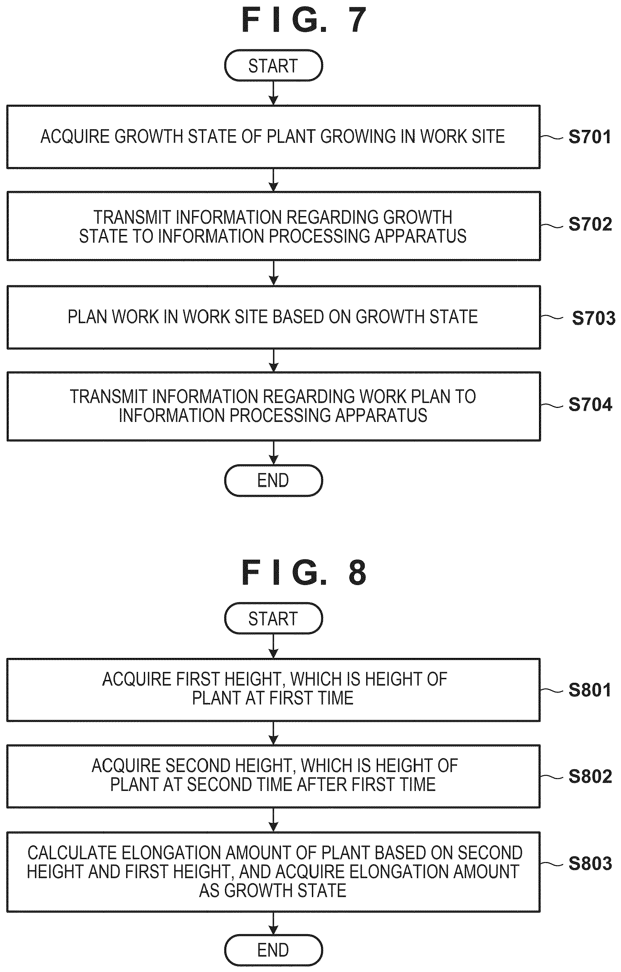

In F603, the growth state acquisition unit 1001 of the server apparatus 10 acquires a growth state of the plant (for example, lawn grass) growing in the work site based on the work information received from the work machine 20. For example, as the growth state, the elongation amount of the plant in each work area constituting the work site is acquired. Details of a method of acquiring the elongation amount will be described later with reference to FIG. 7.

In F604, the transmission unit 1004 of the server apparatus 10 transmits information regarding the growth state to the information processing apparatus 30. In F605, the information processing apparatus 30 displays the information regarding the growth state on the display unit 304.

In F606, the work planning unit 1002 of the server apparatus 10 plans work (for example, cutting work of cutting the plant (grass mowing work or lawn mowing work)) in the work site based on the growth state of the plant. For example, which time the next work needs to be performed is planned based on the elongation amount of the plant. In a case where the elongation amount is different for each work area, it may be planned to perform work after one week for one work area and to perform work after two weeks for another work area.

In addition, it may be proposed that a height of the blade 213 during the next work in a work area where the elongation amount of the plant is large is made lower than a height of the blade 213 during the next work in the work area where the elongation amount of the plant is small. It may be proposed that deep cutting is performed in a work area where the elongation amount is large, that is, a work area where a growth rate of the plant is high. As a result, future heights of the plants in the entire work site can be made uniform (or variation in the elongation amount can be reduced).

In F607, the transmission unit 1004 of the server apparatus 10 transmits information regarding a future work plan in the work site to the information processing apparatus 30. In F608, the information processing apparatus 30 displays the information regarding the work plan on the display unit 304.

Next, a flowchart of FIG. 7 illustrates a procedure of processing performed by the server apparatus according to the present embodiment.

In S701, the growth state acquisition unit 1001 acquires the growth state of the plant (for example, lawn grass) growing in the work site based on the work information received from the work machine 20. For example, as the growth state, the elongation amount of the plant in each work area constituting the work site is acquired.

Here, FIG. 8 is a flowchart illustrating a detailed procedure of the process of acquiring the elongation amount of the plant in S701. In S801, the growth state acquisition unit 1001 acquires a first height, which is a height of the plant at a first time, from the work information. Here, the first time may be any time after completion of the previous work.

For example, in FIG. 11, a height of the plant at a time point (the first time) when work is completed on November 1, 2024 is the same as 8 cm which is the "blade height during the current work" on November 1, 2024. The "previous blade height" (8 cm) during the next work on November 15, 2024 is the same as the "blade height during the current work" (8 cm) on November 1, 2024. Therefore, for example, the "previous blade height" (8 cm) during the next work on November 15, 2024 can be acquired as a first height at the first time in each of the work areas A to D.

In S802, the growth state acquisition unit 1001 acquires a second height, which is a height of the plant at a second time after the first time, from the work information received from the work machine 20. The second height can be acquired by analyzing and estimating a captured image acquired by the front sensor 211 of the work machine 20. Here, the second time may be any time before the start of work. For example, in FIG. 11, a height of the plant at a time point (the second time) before the start of work in the work on November 15, 2024, that is, the height (second height) of lawn grass before the current cutting is acquired. Each piece of information of 12 cm in the work area A, 15 cm in the work area B, 11 cm in the work area C, and 15 cm in the work area D is acquired as the second height.

In S803, the growth state acquisition unit 1001 calculates the elongation amount of the plant based on the second height and the first height, and acquires the elongation amount as the growth state. For example, for the work area A, the second height (12 cm) - the first height (8 cm) = 4 cm is acquired as the elongation amount. For the work area B, the second height (15 cm) - the first height (8 cm) = 7 cm is acquired as the elongation amount. For the work area C, the second height (11 cm) - the first height (8 cm) = 3 cm is acquired as the elongation amount. For the work area D, the second height (15 cm) - the first height (8 cm) = 7 cm is acquired as the elongation amount. After the process of FIG. 8 is completed, the processing proceeds to S702.

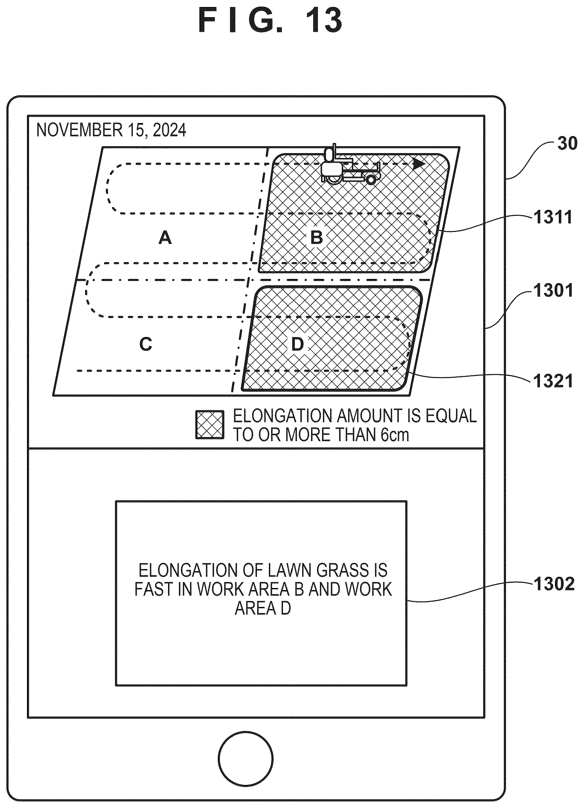

In S702, the transmission unit 1004 transmits the information regarding the growth state acquired in S701 to the information processing apparatus 30. For example, information on the elongation amount of the plant for each work area is transmitted to the information processing apparatus 30. Here, for example, information as illustrated in FIG. 13 is displayed on the display unit 304 of the information processing apparatus 30. In the upper part of a display area 1301 in FIG. 13, the work area B and the work area D in which the elongation amount of the plant from the completion of the previous work at the time point before the start of work on November 15, 2024 is equal to or more than a threshold (for example, 6 cm) are displayed so as to be distinguishable from the work area A and the work area C. Specifically, the work area B and the work area D are displayed in a highlighted manner as in a display mode 1311 and a display mode 1321. Meanwhile, a text message "Elongation of lawn grass in work area B and work area D is fast." is displayed in the lower part of the display area 1301. As a result, the user of the information processing apparatus 30 can easily grasp the status of the elongation amount of the plant in the work site.

In S703, the work planning unit 1002 plans work (for example, cutting work of cutting the plant (grass mowing work or lawn mowing work)) in the work site based on the growth state of the plant. For example, a threshold for the height of the plant on which work is to be performed is set in advance, and it is estimated how many days or how many weeks after a time point when the current work is completed are required for the elongation amount to be equal to or more than the threshold based on how much the plant has elongated for the number of elapsed days from the previous work to the current work. For example, in a case where the number of elapsed days from the previous work to the current work is 10 days, the elongation amount per day may be calculated, and it may be determined how many days need to elapse from the current date for the elongation amount to be equal to or more than the threshold. Then, work is planned to be performed on a date on which it is estimated that the threshold is exceeded.

In addition, weather information may be used for planning. The weather information, such as temperature, precipitation, and solar radiation, may be used to estimate a future elongation amount of the plant after the time point when the current work is completed, and work may be planned to be performed on a date on which it is estimated that the preset threshold for the height of the plant is exceeded. In addition, in a case where one week has already elapsed from a work completion time point, an elongation amount of the plant at a current time point from the work completion time point may be estimated using the past weather information for the one week, a future elongation amount of the plant may be predicted from weather forecast information such as future weather forecast, and work may be planned to be performed on a date on which it is estimated that a total elongation amount is equal to or more than the preset threshold of the height of the plant.

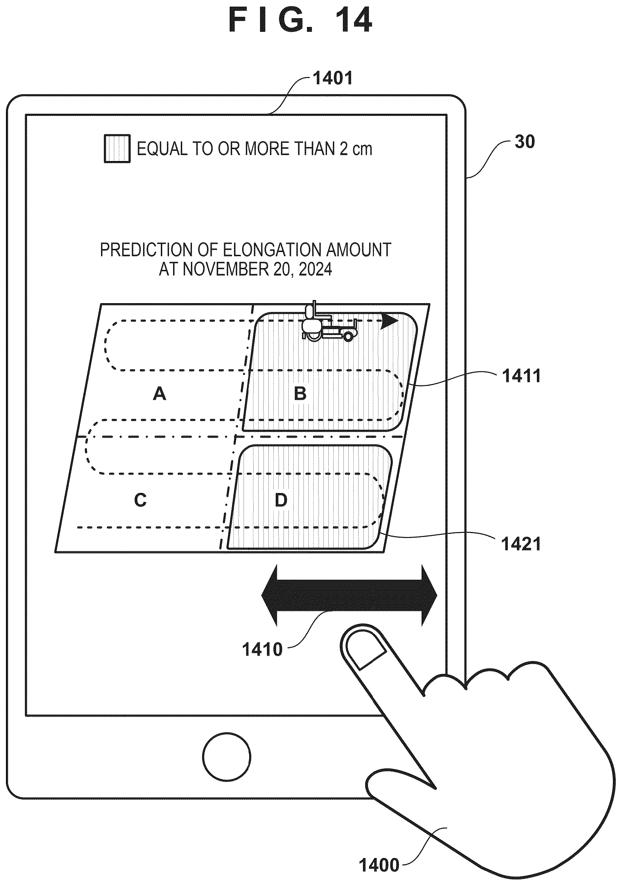

In S704, the transmission unit 1004 transmits information regarding a future work plan in the work site to the information processing apparatus 30. Here, for example, information as illustrated in FIG. 14 is displayed on the display unit 304 of the information processing apparatus 30 as the information regarding the work plan. In a display area 1401 of FIG. 14, a prediction result of the elongation amount of the plant at a certain time point (November 20, 2024) is displayed. The work area B and the work area D are areas in which predicted values of the elongation amount are equal to or more than 2 cm, and are displayed in a highlighted manner so as to be distinguishable from the work area A and the work area C as illustrated in a display mode 1411 and a display mode 1421.

Here, when a user 1400 of the information processing apparatus 30 performs a swipe operation in any direction (for example, the left direction) of a bidirectional arrow 1410, the display area is switched to a display area 1402. In the display area 1402, a prediction result of the elongation amount of the plant at a time point (November 23, 2024) after three days is displayed. The work area B and the work area D are areas in which the predicted values are equal to or more than 4 cm, and are displayed in a highlighted manner so as to be distinguishable from the work area A and the work area C as illustrated in a display mode 1412 and a display mode 1422. In addition, the work area A and the work area C are areas in which the predicted values are equal to or more than 2 cm, and are displayed in a highlighted manner so as to be distinguishable (in different display modes) from the work area B and the work area D as illustrated in a display mode 1423 and a display mode 1424.

Further, in a message display area 1432 of the display area 1402, recommendation information for recommending execution of work is displayed. In the illustrated example, a text message "Predicted elongation amounts in work area B and work area D have exceeded threshold. It is recommended to perform work." is displayed (notified). Here, for example, the threshold may be 3 cm. Further, a prediction result of another date may be sequentially displayed by performing the swipe operation. The display may be switched in units of three days by the swipe operation. Alternatively, it may be changeable to display in another unit such as a unit of one day, based on input from the user. As a result, the user can confirm a prediction result of the elongation amount on any date after completion of the work on November 15, 2024, for example, and can easily recognize when work needs to be performed by viewing the date on which work is recommended and information recommending work. Note that a notification to recommend the execution of work may be given to the user at a timing when the date on which the work is recommended approaches or on a recommended date. Accordingly, the processing of FIG. 7 ends.

As described above, in the present embodiment, the growth state of the plant growing in the work site is acquired, and the information regarding the growth state is displayed. As a result, it is possible to easily grasp the growth state of the plant growing in the work site. In addition, work in the work site is planned based on the growth state, and the information regarding the work plan is displayed. As a result, it is possible to easily grasp when the next work needs to be performed. Therefore, it is easy for a work company or the like having a plurality of customers and undertaking work in a plurality of work sites to grasp which work site (which work area) and when to execute work. Therefore, limited resources (work machines and personnel) can be efficiently utilized.

### [Modifications of First Embodiment]

In the first embodiment, an example has been described in which a difference between the height (second height) of the plant before the start of the current work and the height (first height, that is, previous blade height) of the plant after the completion of the previous work is acquired as the growth state (elongation amount) of the plant at a time point of starting the current work. Then, an example has been described in which the information (elongation amount) is transmitted to the information processing apparatus 30 as the information regarding the growth state and displayed. However, the present invention is not limited to this example, and a prediction result of the elongation amount of the plant estimated at the time of work planning in the above-described embodiment may be transmitted to the information processing apparatus 30 and further displayed as the information regarding the growth state. That is, the prediction result of the future elongation amount as illustrated in FIG. 14 may be transmitted to the information processing apparatus 30 and displayed as the information regarding the growth state.

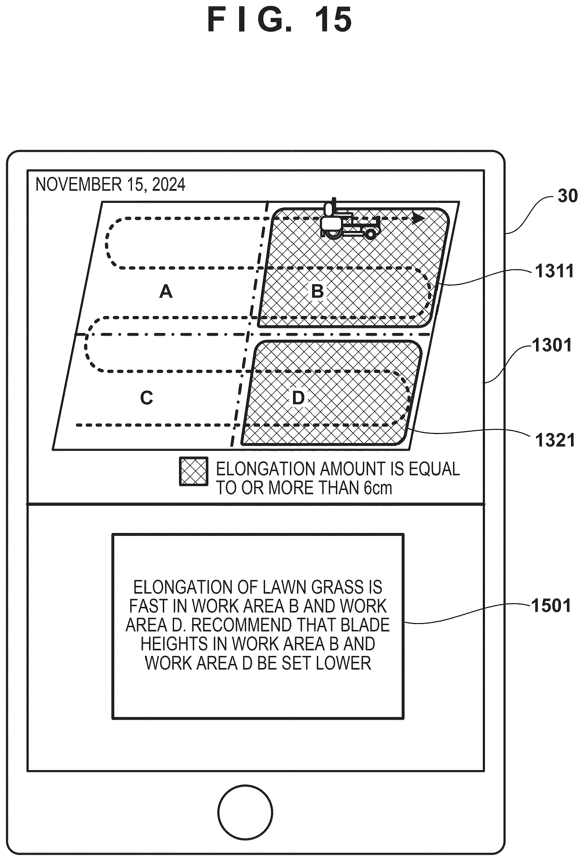

In addition, an example in which information on any work area where work is recommended at a certain point of time is displayed as the information regarding the work plan has been described in the first embodiment, but the present invention is not limited to this example. For example, as illustrated in FIG. 15, a message recommending that the blade height be lowered (that is, deep cutting be performed) in a work area where elongation is fast during the next work based on the tendency of the elongation amount of the plant for each work area may be displayed. At that time, how many cm the blade height should be lowered may be specifically displayed according to the elongation amount in each work area. For example, in the example of FIG. 11, before the start of the work on November 15, 2024, it may be recommended that the blade heights in the work area B and the work area D be set to 7 cm lower than the blade heights (8 cm) in the work area A and the work area C.

Although the first height is the blade height during the previous work in the first embodiment, the present invention is not limited to this example. For example, a rear sensor (not illustrated) that is disposed in a rear portion of the work machine 20 and acquires information on the rear lower side of the work machine 20 may be further provided, and the first height may be calculated by analyzing a captured image captured by the rear sensor (for example, a camera) after the previous work.

### (Second Embodiment)

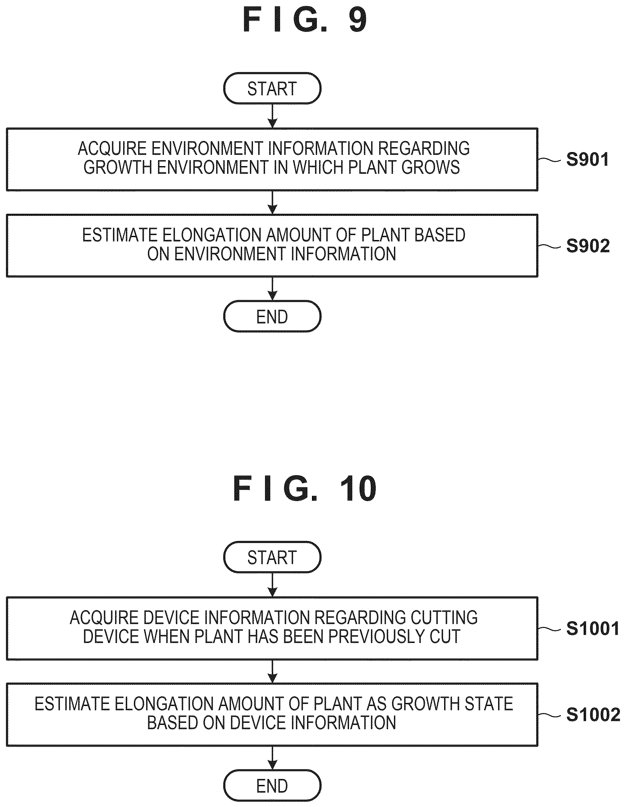

In the present embodiment, an example in which an elongation amount of a plant is estimated and acquired as a growth state based on environment information (for example, weather information) regarding a growth environment in which the plant grows will be described. Note that apparatus configurations are similar to those in the first embodiment, description thereof will be omitted. In addition, the same applies to the processing sequence of FIG. 6 and the flowchart of FIG. 7. In the present embodiment, details of the process in S701 of FIG. 7 will be described with reference to a flowchart of FIG. 9.

Here, FIG. 9 is a flowchart illustrating a detailed procedure of the process of acquiring the elongation amount of the plant in S701 according to the present embodiment. In S901, the growth state acquisition unit 1001 acquires the environment information (for example, weather information) regarding the growth environment in which the plant grows. The environment information can include weather information such as temperature, precipitation, and solar radiation, and the weather information can include actual weather information in the past and/or future weather forecast information. For example, the environment information (for example, weather information) may be acquired from an external server apparatus via the network 40.

In S902, the growth state acquisition unit 1001 estimates the elongation amount of the plant based on the acquired environment information. For example, the number of elapsed days from a time point when the previous work is completed (November 1, 2024) to a time point before the start of the current work (November 15, 2024) is 14 days. When the elongation amount of the plant is estimated from the environment information during this period, the elongation amount of the plant at the time point before the start of the current work (November 15, 2024) can be acquired as the growth state of the plant. For example, correlation information between the environment information (temperature, precipitation, and solar radiation) and the elongation amount may be held in advance, and estimation may be performed based on the correlation information. In addition, a prediction model for estimating the elongation amount based on the environment information may be prepared in advance so as to output an estimated value of the elongation amount when the environment information is input to the prediction model. Note that the elongation amount after a time point when the current work is completed (November 15, 2024) may be further estimated based on the weather information (weather forecast information).

As described above, according to the present embodiment, it is possible to acquire the growth state of the plant without acquiring the height of the plant before the start of the current work and the height of the plant after the completion of the previous work (that is, the previous blade height).

### (Third Embodiment)

In the present embodiment, an example will be described in which an elongation amount of a plant is estimated and acquired as a growth state on the basis of device information (for example, type information such as a model number) regarding a cutting device when the plant has been previously cut. Note that apparatus configurations are similar to those in the first embodiment, description thereof will be omitted. In addition, the same applies to the processing sequence of FIG. 6 and the flowchart of FIG. 7. In the present embodiment, details of the process in S701 of FIG. 7 will be described with reference to a flowchart of FIG. 10.

Here, FIG. 10 is a flowchart illustrating a detailed procedure of the process of acquiring the elongation amount of the plant in S701 according to the present embodiment. In S1001, the growth state acquisition unit 1001 acquires the device information regarding the cutting device (blade) when the plant has been previously cut. That is, device information of a work machine used in the previous work is acquired. The device information can be included in work information transmitted by the work machine 20 in F602.

The device information is information indicating a type of the work machine such as a model number, information indicating the degree of deterioration of the cutting device (blade), or the like. The information indicating the degree of deterioration of the cutting device can include, for example, the number of elapsed days from the previous blade replacement, the number of times of work from the previous blade replacement, cumulative work time, or the like. A type of a blade (size, blade shape, thickness, or the like) may be different depending on the type of the work machine (for example, a small autonomous work machine, a large work machine that can be used for riding, or the like), and accordingly, a subsequent elongation amount of the plant may be different. In addition, the subsequent elongation amount of the plant may be different due to a difference in sharpness of the cutting device (blade) depending on the degree of deterioration of the cutting device (blade). Therefore, the information on the type of the work machine and/or the information indicating the degree of deterioration of the cutting device (blade) is acquired as the device information.

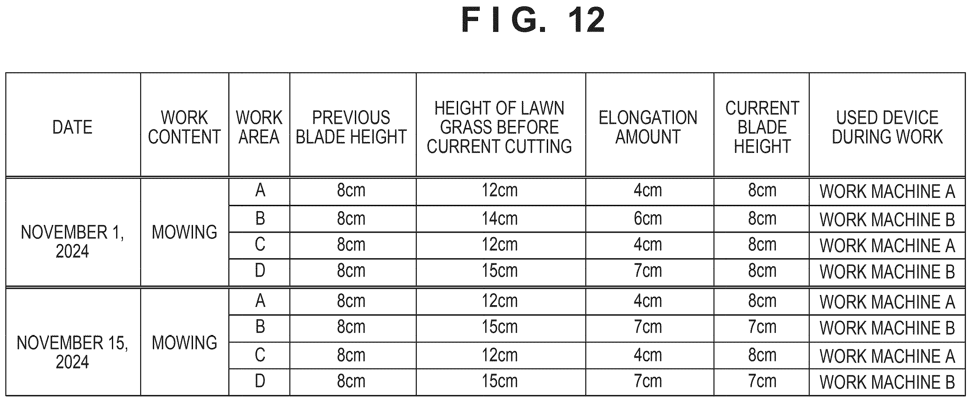

Here, FIG. 12 is a view illustrating an example of work information according to the present embodiment. The work information includes information on a device used during work, and illustrates an example in which work is performed by different types of work machines for work areas. It is assumed that work machine A is used in work area A and work area C, and work machine B is used in work area B and work area D. It can be seen that the elongation amount tends to be small in the work area where the work machine A is used, and the elongation amount tends to be large in the work area where the work machine B is used.

In S1002, the growth state acquisition unit 1001 estimates the elongation amount of the plant as the growth state based on the acquired device information. For example, information on an elongation amount according to the number of elapsed days from the previous cutting may be held for each type of work machine from history information of a plurality of times of work, and the elongation amount of the plant may be estimated based on the held information and the number of elapsed days from the previous work. In addition, information on an elongation amount according to the number of elapsed days from the previous cutting may be held for each degree of deterioration of the cutting device (blade), and the elongation amount of the plant may be estimated based on the held information and the number of elapsed days from the previous work.

As described above, according to the present embodiment, it is possible to acquire the growth state of the plant without acquiring the height of the plant before the start of the current work and the height of the plant after the completion of the previous work (that is, the previous blade height).

### [Modifications of First to Third Embodiments]

Although an example in which the work machine 20 performs work has been described in the above-described embodiment, there may be an area in which the work machine 20 is difficult to travel in a work area. In a case where there is a handheld work area in which a worker has performed work while holding a brush cutter urgently or temporarily, control may be performed so as not to estimate the elongation amount of the plant for such a work area.

Although an example in which the server apparatus 10 executes main processing has been described in the above-described embodiment, the present invention is not limited to this example. The work machine 20 may perform part or all of the processing of the server apparatus 10. In this case, information processed by the work machine 20 may be transmitted to the information processing apparatus 30 via the server apparatus 10 or directly without passing through the server apparatus 10. In addition, the information processing apparatus 30 may perform part or all of the processing of the server apparatus 10. Any one of the work machine 20, the server apparatus 10, and the information processing apparatus 30 can execute each process in the above-described embodiment, and a specific apparatus does not necessarily execute the entire processing.

Although an example in which a work plan is proposed has been described in the above-described embodiment, augmented reality (AR) may be displayed on, for example, the tablet terminal 30c at the time of proposal. For example, an icon or the like indicating the proposal content may be displayed in a superimposed manner on an image obtained by capturing a work site, and details of the proposal content of a work plan may be displayed when the icon is tapped.

In addition, an example in which the server apparatus 10 connected to the work machine 20 via the network 40 mainly executes processing has been described in the above-described embodiment, but the present invention is not limited to this example. For example, the above-described embodiment may be applied to an example in which a plurality of the work machines 20 are connected to each other in a communication-enabling manner, one of the work machines 20 operates as a master work machine, and the other work machine 20 operates as a slave work machine. That is, the master work machine may perform the processing of the above-described embodiment (the processing mainly executed by the server apparatus 10).

In addition, an example in which the server apparatus 10, the work machine 20, and the information processing apparatus 30 are connected in a communication-enabling manner via the network 40 has been described in the above-described embodiment, but the present invention is not limited to this example. For example, an edge server may be provided instead of the server apparatus 10, and only necessary data may be accumulated in a cloud. As a result, it is possible to suppress all pieces of data from being concentrated in the cloud. Specifically, the edge server may acquire data from the work machine 20, execute the processing of the above-described embodiment, and store, in the cloud, the acquired data and the processing result in the edge server. As a result, the information processing apparatus 30 can acquire necessary data from the cloud. When edge computing is utilized as described above, only necessary data is sent to the cloud while data processing is safely performed at high speed on the edge server side. Thus, the amount of communication can be suppressed, and a load on the network can be reduced.

### <Summary of embodiments>

1. A management method according to the above embodiments is a management method for managing a work site, the management method comprising
   an acquisition step of acquiring a growth state of a plant growing in the work site.
   As a result, it is possible to grasp the growth state of the plant growing in the work site.
2. The management method according to the above embodiments, wherein the acquisition step includes a first acquisition step of acquiring the growth state by estimating the growth state of the plant.
   As a result, for example, the current growth state from the time of the previous work can be acquired.
3. The management method according to the above embodiments, wherein
   the growth state includes an elongation amount of the plant, and
   the first acquisition step includes:
      acquiring environment information regarding a growth environment in which the plant grows; and
      estimating the elongation amount based on the environment information.
   As a result, it is possible to perform estimation in consideration of the environment of the work site, and the estimation accuracy of the elongation amount can be improved.
4. The management method according to the above embodiments, wherein
   the growth state includes an elongation amount of the plant from a time point when the plant has been previously cut, and
   the first acquisition step includes:
      acquiring device information related to a cutting device when the plant has been previously cut; and
      estimating the elongation amount based on the device information.
   As a result, the estimation accuracy of the elongation amount can be improved.
5. The management method according to the above embodiments, wherein
   the growth state includes an elongation amount of the plant, and
   the acquisition step includes a second acquisition step of acquiring the elongation amount.
   As a result, it is possible to grasp the elongation amount of the plant growing in the work site.
6. The management method according to the above embodiments, wherein
   the second acquisition step includes:
      acquiring a first height that is a height of the plant at a first time;
      acquiring a second height that is a height of the plant at a second time after the first time; and
      calculating the elongation amount based on the second height and the first height.
   As a result, the elongation amount of the plant can be accurately obtained.
7. The management method according to the above embodiments,
   wherein the acquiring the first height includes acquiring a height of a cutting device, included in a work machine that performs work in the work site, as the first height.
   As a result, for example, a height of the plant after the previous work can be acquired without calculation.
8. The management method according to the above embodiments,
   wherein the acquiring the first height includes acquiring the first height based on an image captured during previous work using a rear camera included in a work machine that performs work in the work site.
   As a result, for example, the height of the plant after the previous work can be accurately obtained.
9. The management method according to the above embodiments, wherein
   the second acquisition step further includes
      storing the first height in association with a geographical position of the plant in the work site.
   As a result, for example, the height of the plant after the previous work can be grasped for each location.
10. The management method according to the above embodiments, further comprising a planning step of planning work in the work site based on the growth state of the plant.
   As a result, for example, the work can be executed at an appropriate timing.
11. The management method according to the above embodiments, wherein
   the growth state includes an elongation amount of the plant, and
   the work in the planning step includes cutting work of cutting the plant.
   As a result, for example, it is possible to execute the work of cutting the plant at an appropriate timing.
12. The management method according to the above embodiments, further comprising a display step of displaying information regarding a plan of the work.
   As a result, the next work plan can be easily recognized.
13. The management method according to the above embodiments, wherein the information regarding the plan of the work includes recommendation information including a recommended date for execution of next work.
   As a result, it is possible to grasp when the next work is to be performed.
14. The management method according to the above embodiments, wherein the information regarding the plan of the work includes recommendation information including a recommended height of a cutting device of a work machine during execution of next work.
   As a result, the work can be performed at an appropriate height of the cutting device (blade) during the next work.
15. The management method according to the above embodiments, wherein the growth state includes an elongation amount of the plant,
   the management method further comprising
      a display step of displaying the elongation amount.
   As a result, the elongation amount of the plant can be easily grasped.
16. The management method according to the above embodiments, wherein the display step includes displaying the elongation amount by time.
   As a result, for example, it is possible to easily recognize which level of the elongation amount is in time series.
17. A program according to the above embodiments is a program for causing a computer to execute the management method according to the above embodiments.
   This makes it possible to implement the management method as a program.
18. A storage medium according to the above embodiments is a storage medium storing a program for causing a computer to execute the management method according to the above embodiments.
   This makes it possible to implement the management method on a storage medium.
19. An information processing system that manages a work site,
   the information processing system comprising an acquisition unit configured to acquire a growth state of a plant growing in the work site.
   As a result, it is possible to grasp the growth state of the plant growing in the work site.
20. An information processing apparatus that manages a work site,
   the information processing apparatus comprising an acquisition unit configured to acquire a growth state of a plant growing in the work site.

As a result, it is possible to grasp the growth state of the plant growing in the work site.

According to the present invention, it is possible to grasp the growth state of the plant growing in the work site.

### <Other Embodiments>

In addition, a program for achieving one or more functions that have been described in each of the embodiments is supplied to a system or an apparatus through a network or via a storage medium, and one or more processors on a computer of the system or the apparatus are capable of reading and executing the program. The present invention can also be achieved according to such an aspect.

The invention is not limited to the foregoing embodiments, and various variations/changes are possible within the spirit of the invention.

## Claims

1. A management method for managing a work site, the management method comprising
an acquisition step (F603, S701) of acquiring a growth state of a plant growing in the work site.

2. The management method according to claim 1, wherein the acquisition step includes a first acquisition step of acquiring the growth state by estimating the growth state of the plant.

3. The management method according to claim 2, wherein
the growth state includes an elongation amount of the plant, and
the first acquisition step includes:
acquiring (S901) environment information regarding a growth environment in which the plant grows; and
estimating (S902) the elongation amount based on the environment information.

4. The management method according to claim 2, wherein
the growth state includes an elongation amount of the plant from a time point when the plant has been previously cut, and
the first acquisition step includes:
acquiring (S1001) device information related to a cutting device when the plant has been previously cut; and
estimating (S1002) the elongation amount based on the device information.

5. The management method according to any one of claims 1 to 4, wherein
the growth state includes an elongation amount of the plant, and
the acquisition step includes a second acquisition step of acquiring the elongation amount.

6. The management method according to claim 5, wherein
the second acquisition step includes:
acquiring (S801) a first height that is a height of the plant at a first time;
acquiring (S802) a second height that is a height of the plant at a second time after the first time; and
calculating (S803) the elongation amount based on the second height and the first height.

7. The management method according to claim 6, wherein the acquiring the first height includes acquiring a height of a cutting device, included in a work machine that performs work in the work site, as the first height.

8. The management method according to claim 6, wherein the acquiring the first height includes acquiring the first height based on an image captured during previous work using a rear camera included in a work machine that performs work in the work site.

9. The management method according to any one of claims 6 to 8, wherein
the second acquisition step further includes
storing the first height in association with a geographical position of the plant in the work site.

10. The management method according to any one of claims 1 to 9, further comprising a planning step of planning work in the work site based on the growth state of the plant.

11. The management method according to claim 10, wherein
the growth state includes an elongation amount of the plant, and
the work in the planning step includes cutting work of cutting the plant.

12. The management method according to claim 10 or 11, further comprising a display step of displaying information regarding a plan of the work.

13. The management method according to claim 12, wherein the information regarding the plan of the work includes recommendation information including a recommended date for execution of next work.

14. The management method according to claim 12 or 13, wherein the information regarding the plan of the work includes recommendation information including a recommended height of a cutting device of a work machine during execution of next work.

15. The management method according to any one of claims 1 to 14, wherein the growth state includes an elongation amount of the plant,
the management method further comprising
a display step of displaying the elongation amount.

16. The management method according to claim 15, wherein the display step includes displaying the elongation amount by time.

17. A program for causing a computer to execute a management method for managing a work site,
the management method comprising an acquisition step of acquiring a growth state of a plant growing in the work site.

18. An information processing system that manages a work site,
the information processing system comprising acquisition means for acquiring a growth state of a plant growing in the work site.
